(19) Europäisches Patentamt
European Patent Office
Office européen des brevets

(11) EP 4 657 167 A1

(12) EUROPEAN PATENT APPLICATION

(43) Date of publication:
03.12.2025 Bulletin 2025/49

(51) International Patent Classification (IPC):
G03G 15/00 (2006.01)

(21) Application number: 25177637.3

(52) Cooperative Patent Classification (CPC):
G03G 15/5029; G03G 2215/00738

(22) Date of filing: 20.05.2025

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 27.05.2024 JP 2024085335

(71) Applicant: KONICA MINOLTA, INC.
Tokyo 100-7015 (JP)

(72) Inventors:
• YOSHIKAWA, Hiroyuki
Tokyo, 100-7015 (JP)
• MASUDA, Junichi
Tokyo, 100-7015 (JP)
• OGATA, Satoshi
Tokyo, 100-0005 (JP)
• ISHIKAWA, Akimasa
Tokyo, 100-0005 (JP)

(74) Representative: Gille Hrabal
Partnerschaftsgesellschaft mbB
Patentanwälte
Brucknerstraße 20
40593 Düsseldorf (DE)

(54) **SHEET CHARACTERISTIC DETECTION DEVICE, IMAGE FORMING SYSTEM AND PROGRAM.**

(57)     A sheet characteristic detection device includes, a nipper that nips a recording medium; a sheet thickness detection sensor that detects displacement of the recording medium in a thickness direction at the nipper; and a hardware processor that calculates a thickness of the recording medium based on a detection value detected by the sheet thickness detection sensor. The hardware processor corrects the detection value detected by the sheet thickness detection sensor or the thickness according to a length of the recording medium in a width direction orthogonal to a conveyance direction or the length of a portion of the recording medium in contact with the nipper in the width direction, and acquires the thickness of the recording medium.

FIG.8

**Description**

BACKGROUND OF THE INVENTION

TECHNICAL FIELD

The present invention relates to a sheet characteristic detection device, an image forming system, and a storage medium.

DESCRIPTION OF RELATED ART

An image forming system includes an image forming apparatus that forms an image on a sheet, and a sheet feed device that feeds the sheet to the image forming apparatus. Then, the image forming apparatus forms the image on the sheet based on output job information. Furthermore, the image forming system includes a sheet characteristic detection device that detects a size and a type of the sheet before the image is formed on the sheet.

A conventional sheet characteristic detection device of this type is described in, for example, Japanese Unexamined Patent Publication No. 2021-42049. Japanese Unexamined Patent Publication No. 2021-42049 discloses a technique including a first roller and a second roller that nip and convey a recording medium, a roller shaft that rotatably supports the second roller, a shaft support portion, and a displacement detector. The shaft support portion supports the roller shaft movably in a thickness direction of a recording medium. The displacement detector detects displacement of the second roller in the thickness direction.

However, with the technology described in Japanese Unexamined Patent Publication No. 2021-42049, it has been found that in a case where a width of the recording medium or a length of the recording medium to contact a nip portion is shorter than a member that nips the recording medium, the recording medium may vary in size even if the recording medium has the same thickness. Therefore, the technique described in Japanese Unexamined Patent Publication No. 2021-42049 has a problem that detection accuracy of sheet thickness of the recording medium is lowered.

SUMMARY OF THE INVENTION

In view of the above-mentioned problems, an object of the present invention is to provide a sheet characteristic detection device, an image forming system, and a storage medium capable of suppressing a decrease in detection accuracy of a sheet thickness of a recording medium.

In order to solve the above problem and achieve the object of the present invention, according to one aspect of the present invention, a sheet characteristic detection device according to an aspect of the present invention includes,

a nipper that nips a recording medium;
a sheet thickness detection sensor that detects displacement of the recording medium in a thickness direction at the nipper; and
a hardware processor that calculates a thickness of the recording medium based on a detection value detected by the sheet thickness detection sensor, wherein the hardware processor corrects the detection value detected by the sheet thickness detection sensor or the thickness according to a length of the recording medium in a width direction orthogonal to a conveyance direction or the length of a portion of the recording medium in contact with the nipper in the width direction, and acquires the thickness of the recording medium.

According to another aspect of the present invention, an image forming system according to an embodiment of the present invention includes,

an image forming apparatus that forms an image on a recording medium; and
a sheet characteristic detection device that is arranged on an upstream side of the image forming apparatus in a conveyance direction of the recording medium and that detects a characteristic of the recording medium,
wherein,
the sheet characteristic detection device includes,

a nipper that nips the recording medium,
a sheet thickness detection sensor that detects displacement of the recording medium in a thickness direction at the nipper, and
a hardware processor that calculates a thickness of the recording medium based on a detection value detected by the sheet thickness detection sensor, and

the hardware processor corrects the detection value detected by the sheet thickness detection sensor or the thickness according to a length of the recording medium in a width direction orthogonal to the conveyance direction or the length of a portion of the recording medium in contact with the nipper in the width direction, and acquires the thickness of the recording medium.

According to another aspect of the present invention, a program according to an embodiment of the present invention is a program that causes a sheet characteristic detection device to perform:

detecting displacement of a recording medium in a thickness direction at a nipper that nips the recording medium;
acquiring a length of the recording medium in a width direction orthogonal to a conveyance direction or a length of a portion of the recording medium in contact with the nipper in the width direction; and

correcting the detected detection value or the thickness according to the length of the recording medium in the width direction or the length of the portion of the recording medium in contact with the nipper in the width direction and acquiring a thickness of the recording medium.

## BRIEF DESCRIPTION OF THE DRAWINGS

The advantages and features provided by one or more embodiments of the invention will become more fully understood from the detailed description given hereinafter and the appended drawings which are given by way of illustration only, and thus are not intended as a definition of the limits of the present invention, and wherein:

FIG. 1 is a schematic configuration diagram illustrating a whole configuration of an image forming system according to an embodiment of the present invention;

FIG. 2 is a block diagram showing a hardware configuration of a sheet characteristic detection device according to the embodiment of the present invention;

FIG. 3 is a schematic configuration diagram of a sheet physical property detector according to the embodiment of the present invention;

FIG. 4 is a cross-sectional view illustrating a nip portion of the sheet physical property detector according to the embodiment of the present invention;

FIG. 5 is a schematic configuration diagram of the sheet physical property detector according to an embodiment of the present invention, illustrating a state in which a sheet is nipped;

FIG. 6 is a cross-sectional view illustrating the nip portion of the sheet physical property detector according to the embodiment of the present invention, and illustrating a state where the sheet is pinched;

FIG. 7 is a schematic configuration diagram illustrating a sheet size detector according to an embodiment example of the present invention;

FIGS. 8A and 8B are explanatory diagrams illustrating a difference in a displacement amount of a driven roller shaft of the sheet physical property detector due to a difference in sheet size (length in a width direction), FIG. 8A illustrates an example in which a sheet width is shorter than a roller width, and FIG. 8B illustrates an example in which the sheet width is longer than the roller width;

FIG. 9A is a table illustrating a change amount and a change ratio between a detection value of a sheet thickness detection sensor and an actual sheet thickness due to a difference in a sheet width (CD length) of the sheet, and FIG. 9B is a graph illustrating the detection values of the sheet thickness detection sensor according to differences in the sheet widths of the sheets;

FIG. 10 is a graph illustrating an outline for acquiring a correction coefficient;

FIG. 11 is a flowchart showing an operation of acquiring the correction coefficient in the image forming system according to the embodiment of the present invention;

FIG. 12 is a flowchart showing a calibration operation in the image forming system according to the embodiment of the present invention;

FIG. 13 is a flowchart showing a sheet thickness calculation operation in the image forming system according to the embodiment of the present invention;

FIG. 14 is a flowchart which shows an example of a sheet thickness detection operation in the image forming system according to the embodiment of the present invention;

FIG. 15 is an explanatory diagram showing a modification example of the sheet thickness detection operation in the image forming system according to the embodiment of the present invention;

FIG. 16 shows an example of a correction table in the image forming system according to the embodiment of the present invention;

FIG. 17 is an explanatory diagram showing a modification example of the sheet thickness detection operation in the image forming system according to the embodiment of the present invention;

FIG. 18 shows another example of the correction table in the image forming system according to the embodiment of the present invention;

FIG. 19 is a flowchart which shows a modification example of the sheet thickness detection operation in the image forming system according to the embodiment of the present invention; and

FIG. 20 shows another example of the correction table in the image forming system according to the embodiment of the present invention.

## DETAILED DESCRIPTION

Hereinafter, one or more embodiments of the present invention will be described with reference to the drawings. However, the scope of the invention is not limited to the disclosed embodiments.

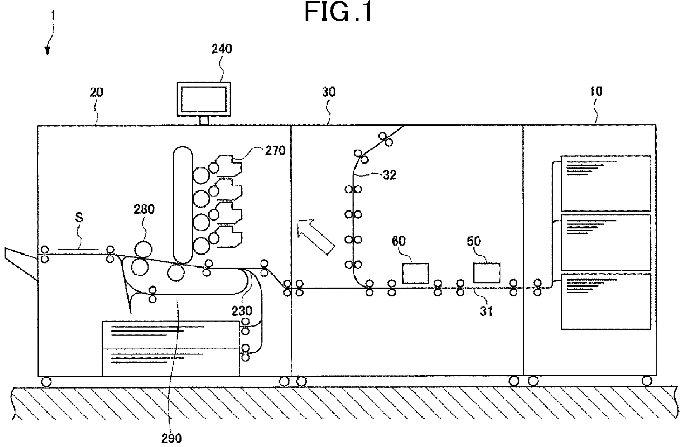

Hereinafter, an embodiment for implementing the image forming system of the present invention will be described with reference to FIGS. 1 to 20. In the drawings, common members are denoted by the same reference numerals. Furthermore, the present invention is not limited to the following forms.

1. Embodiments

1-1. Configuration of Image Forming System

First, an overall configuration of an image forming system according to an example of an embodiment of the present invention (hereinafter, referred to as "present embodiment") will be described. FIG. 1 is a schematic configuration diagram of an image forming system 1 of the present embodiment.

As illustrated in FIG. 1, the image forming system 1 includes a sheet feed unit 10 that feeds a sheet S, an image forming apparatus 20, and a sheet characteristic detection device 30. The sheet feed unit 10, the image forming apparatus 20, and the sheet characteristic detection device 30 are each connected to a network such as a LAN, and are connected to each other via the network. Furthermore, in the image forming system 1, the sheet feed unit 10, the sheet characteristic detection device 30, and the image forming apparatus 20 are arranged in this order from an upstream side of a conveyance path of the sheet S, and are connected in series.

The sheet feed unit 10 is disposed at a most upstream of the image forming system 1. The sheet feed unit 10 includes a plurality of sheet feed cassettes and is configured to be able to store a large amount of sheets. The sheet feed unit 10 feeds the sheet S stored in a sheet feed cassette to the sheet characteristic detection device 30 by a sheet conveyance section.

Note that the example in which the sheet feed unit 10 is provided as the image forming system 1 has been described, but the image forming system 1 is not limited to this, and the image forming system 1 might not be provided with the sheet feed unit 10.

The sheet characteristic detection device 30 detects characteristics of the conveyed sheet S, such as a sheet type, a basis weight, a thickness, a surface property, a base, and a color of the sheet S. In addition, the sheet characteristic detection device 30 includes a sheet size detector 50 that detects the size of the sheet S and a sheet physical property detector 60 that detects the thickness of the sheet S. Furthermore, the sheet characteristic detection device 30 includes a conveyance section 31 that conveys the sheet S, and a sheet ejection section 32 that branches from the conveyance section 31 and ejects the sheet S to a sheet ejection tray.

The sheet size detector 50 and the sheet physical property detector 60 are disposed on the conveyance section 31. The sheet size detector 50 is disposed on the upstream side of the sheet physical property detector 60 in the conveyance direction. In addition, a branch section with the sheet ejection section 32 is disposed on a downstream side of the sheet physical property detector 60 in the conveyance direction in the conveyance section 31. Next, the sheet S conveyed from the conveyance section 31 is conveyed to the image forming apparatus 20.

The image forming apparatus 20 forms an image on the fed sheet S based on output job information and image data. Furthermore, the image forming apparatus 20 is an apparatus that forms an image on the sheet S by, for example, an electrophotographic method. The image forming apparatus 20 includes a sheet conveyance section 230, an operation/display panel 240, an image forming section 270, a fixing section 280, and a reverse conveyance section 290.

An operation/display panel 240 indicating a notification section is installed on an upper portion of a housing of the image forming apparatus 20. The operation/display panel 240 is formed by stacking a display panel and a touch screen (operation part), so that a user can perform operation and information can be displayed. The operation/display panel 240 is, for example, a touch screen including a display such as a liquid crystal display (LCD) or an organic electro-luminescence display (ELD).

The operation/display panel 240 is an example of a display part and an inputter, and displays an instruction menu for the user, information regarding acquired image data, and the like. Further, the operation/display panel 240 includes a plurality of keys, receives input of data such as various instructions, characters, and numerals by key operation of the user, and outputs an input signal to the controller of the image forming apparatus 20 or the sheet characteristic detection device 30.

Note that in the present embodiment, the example in which the inputter and the display part are integrally formed as the operation/display panel 240 has been described, but the present embodiment is not limited thereto, and the operation part and the display part may be separately formed.

The sheet conveyance section 230 conveys the sheet S fed from the sheet feed unit 10 to the image forming section 270, the fixing section 280, the reverse conveyance section 290, or the sheet ejection tray.

The image forming section 270 includes, for example, image forming units in a plurality of colors (cyan, magenta, yellow, black, and the like) and can form a color toner image on the sheet. On the downstream side of the image forming section 270 in the sheet conveyance direction, the fixing section 280 is arranged to which the sheet on which the toner image has been formed is conveyed.

The fixing section 280 fixes the toner image transferred onto the sheet S to the sheet S by pressurizing and heating the conveyed sheet S. The sheet S subjected to fixing processing by the fixing section 280 is conveyed to the reverse conveyance section 290 or the sheet ejection tray by the sheet conveyance section 230.

The reverse conveyance section 290 is provided with a reversing section that reverses the sheet S. The sheet S whose front and back or front and rear are reversed by the reversing section is conveyed to the upstream side of the image forming section 270 or the downstream side of the fixing section 280 through the reverse conveyance section 290.

1-2. Hardware Configuration

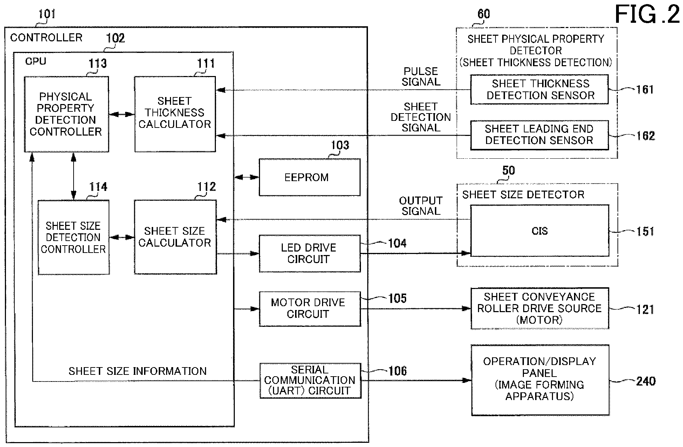

Next, a hardware configuration of the sheet characteristic detection device 30 will be described with reference to FIG. 2.

FIG. 2 is a block diagram illustrating a hardware configuration of the sheet characteristic detection device 30.

As illustrated in FIG. 2, the sheet characteristic detection device 30 includes a controller 101 (hardware processor), a sheet size detector 50, a sheet physical property detector 60, and a sheet conveyance roller drive source 121 that drives the conveyance section 31. The sheet size detector 50 includes a linear contact image sensor (CIS) image sensor 151 that detects the size of the sheet S. The sheet physical property detector 60 includes a sheet thickness detection sensor 161 and a sheet leading end detection sensor 162. The sheet thickness detection sensor 161 detects the thickness of the sheet S. The sheet leading end detection sensor 162 detects an upper end portion, that is, a leading end in the conveyance direction in the sheet S conveyed to the sheet physical property detector 60. The controller 101 is connected to the operation/display panel of the image forming apparatus 20 via a serial communication (UART) circuit 106.

The controller 101 includes, for example, a central processing unit (CPU) 102, an electrically erasable programmable read-only memory (EEPROM) 103 which is an example of a storage section, an LED drive circuit 104, a motor drive circuit 105, and a serial communication circuit 106. The EEPROM 103, the LED drive circuit 104, the motor drive circuit 105, and the serial communication circuit 106 are connected to the CPU 102.

The EEPROM 103 stores a program or the like to be executed by the CPU 102, and is used as a workspace of the CPU 102. A correction coefficient K used in calculating the sheet thickness of the sheet S and a correction table are stored in the EEPROM 103.

The LED drive circuit 104 is connected to the sheet size detector 50. Then, the drive circuit 104 outputs a drive signal to the LED which is an example of a light source provided in the sheet size detector 50.

The motor drive circuit 105 is connected to the sheet conveyance roller drive source 121. The drive circuit 105 controls the driving of the sheet conveyance roller drive source 121 based on a control signal from the CPU 102. Thus, conveyance of the sheet S passing through the sheet characteristic detection device 30 is controlled.

The CPU 102 includes a sheet thickness calculator 111, a sheet size calculator 112, a physical property detection controller 113, and a sheet size detection controller 114. The sheet thickness calculator 111 is connected to the sheet thickness detection sensor 161 and the sheet leading end detection sensor. Next, the sheet thickness calculator 111 receives a pulse signal from the sheet thickness detection sensor 161 and a sheet detection signal from the sheet leading end detection sensor 162. The sheet thickness calculator 111 calculates the thicknesses of the sheet S on the basis of these signals, the size information on the sheet S, and the correction coefficient K and the correction table stored in the EEPROM 103.

Furthermore, the sheet thickness calculator 111 is connected to the physical property detection controller 113. The physical property detection controller 113 controls the sheet physical property detector 60 via the sheet thickness calculator 111. Furthermore, the physical property detection controller 113 acquires, via the serial communication circuit 106, sheet size information input to the operation/display panel 240 by the user. In a case where the user does not input the sheet size information to the operation/display panel 240, the physical property detection controller 113 acquires the sheet size information calculated by the sheet size calculator 112 via the sheet size detection controller 114 described later.

The sheet size calculator 112 calculates the size of the sheet S based on a signal outputted from the CIS 151 provided in the sheet size detector 50. Furthermore, the sheet size calculator 112 is connected to the sheet size detection controller 114. The sheet size detection controller 114 controls the sheet size detector 50 via the sheet size calculator 112. Furthermore, the sheet size detection controller 114 transmits the sheet size information calculated by the sheet size calculator 112 to the physical property detection controller 113.

1-3. Example of Configuration of Sheet Physical Property Detector

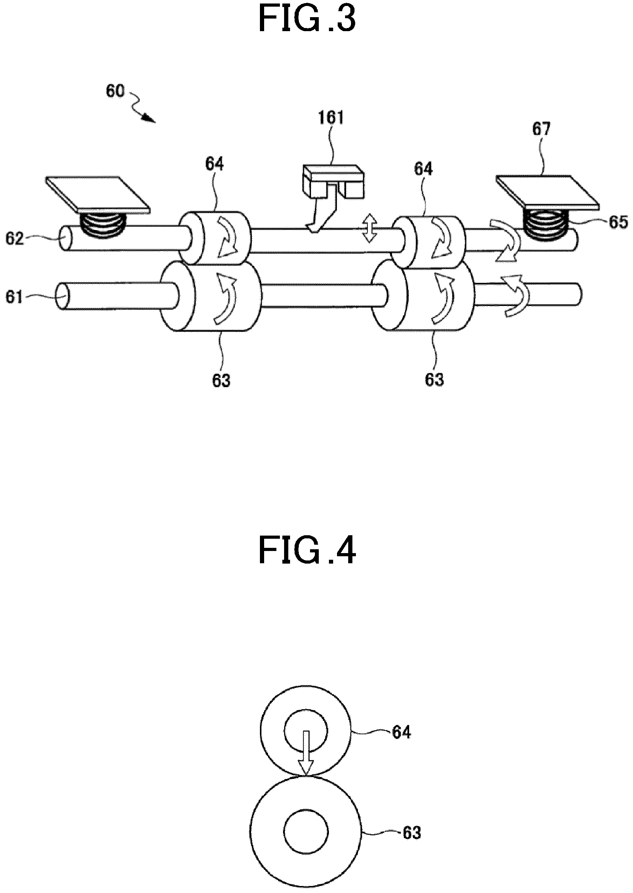

Next, a configuration of the sheet physical property detector 60 will be described with reference to FIGS. 3 to 6.

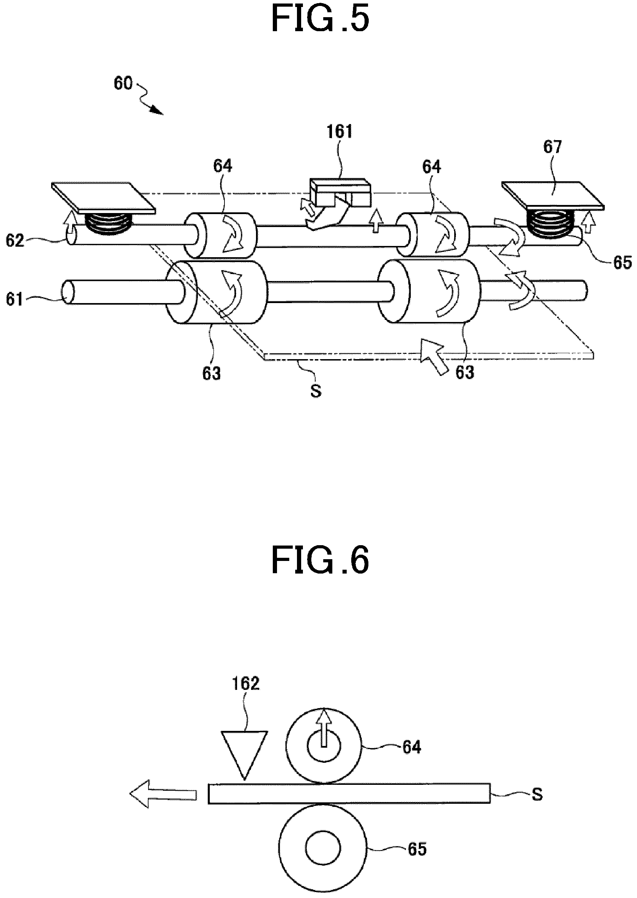

FIGS. 3 and 5 are schematic configuration diagrams showing the sheet physical property detector 60, and FIGS. 4 and 6 are cross-sectional views showing the sheet physical property detector 60. FIGS. 3 and 4 illustrate a state in which no sheet S exists, and FIGS. 5 and 6 illustrate a state in which a sheet S exists.

As shown in FIG. 3, the sheet physical property detector 60 includes a driving roller shaft 61, a driven roller shaft 62, a first roller 63 indicating a first nip portion (first nipper), a second roller 64 indicating a second nip portion (second nipper), a biasing member 65, a support portion 67, and a sheet thickness detection sensor 161.

The driving roller shaft 61 is connected to the sheet conveyance roller drive source 121. The driving roller shaft 61 is rotationally driven by the sheet conveyance roller drive source 121. The driving roller shaft 61 is disposed such that the axis direction of the driving roller shaft 61 is orthogonal to the conveyance direction and parallel to the width direction of the sheet S.

According to the present embodiment, two first rollers 63 are provided on the driving roller shaft 61. The two first rollers 63 are spaced apart from each other in the axis direction of the driving roller shaft 61. The two first rollers 63 rotate together with rotational driving of the driving roller shaft 61.

The driven roller shaft 62 is disposed such that the axis direction of the driven roller shaft 62 is parallel to the axis direction of the driving roller shaft 61. The driven roller shaft 62 is disposed to face the driving roller shaft 61. The driven roller shaft 62 is rotatably supported. The driven roller shaft 62 is supported so as to be movable in a direction in which the driven roller shaft 62 moves toward and away from the driving roller shaft 61. Although the driving roller shaft 61 is rotatably supported, the driving roller shaft 61 is restricted from moving toward and away from the driven roller shaft 62.

The driven roller shaft 62 is provided with two second rollers 64. The two second rollers 64 are spaced apart from each other in the direction of the driven roller shaft 62. The two second rollers 64 face the first roller 63 provided on the driving roller shaft 61. Furthermore, as illustrated in FIGS. 5 and 6, the first roller 63 and the second roller 64 nip the sheet S.

Furthermore, the biasing members 65 are disposed at both end portions of the driven roller shaft 62 in the axis direction, respectively. One end portion of the biasing member 65 is in contact with the driven roller shaft 62. The other end portion of the biasing member 65 is disposed on the support portion 67 opposed to the driven roller shaft 62. The biasing member 65 biases the driven roller shaft 62 toward the driving roller shaft 61.

When the driven roller shaft 62 is biased toward the driving roller shaft 61, as shown in FIG. 4, the second roller 64 supported by the driven roller shaft 62 is biased toward the first roller 63. Then, when the first roller 63 is rotationally driven, the second roller 64 also rotates together with the first roller 63. In addition, as the first roller 63 and the second roller 64 rotate, the first roller 63 and the second roller 64 convey the nipped sheet S as illustrated in FIGS. 5 and 6.

As the biasing member 65, for example, a compression coil spring is applied. Note that the biasing member 65 is not limited to the compression coil spring, and various other elastic members such as a leaf spring and rubber are applicable.

Further, a lever piece of the sheet thickness detection sensor 161 is in contact with the driven roller shaft 62 between the two second rollers 64. The sheet thickness detection sensor 161 is disposed on the side of the driven roller shaft 62 opposite to the side facing the driving roller shaft 61.

As shown in FIGS. 5 and 6, when the sheet S enters between the first roller 63 and the second roller 64, the driven roller shaft 62 is displaced in a direction moving away from the driving roller shaft 61 against a bias force of the biasing member 65. Further, the lever piece of the sheet thickness detection sensor 161, which abuts against the driven roller shaft 62, also rotates in the direction moving away from the driving roller shaft 61.

Then, the sheet thickness detection sensor 161 detects the sheet thickness of the sheet S from a rotating angle of the lever piece. The sheet thickness calculator 111 calculates the sheet thickness of the sheet S on the basis of the detection value of the sheet thickness detection sensor 161 in the state where the sheet S is not present between the first roller 63 and the second roller 64 and the detection value of the sheet thickness detection sensor 161 in the state where the sheet S is present between the first roller 63 and the second roller 64.

Further, as shown in FIG. 6, a sheet leading end detection sensor 162 is disposed on the downstream side of the first roller 63 and the second roller 64 in the conveyance direction. The sheet leading end detection sensor 162 detects the leading end of the sheet S. Next, the controller 101 determines the presence or absence of the sheet S between the first roller 63 and the second roller 64 based on sheet detection information from the sheet leading end detection sensor 162.

Furthermore, as the first roller 63, for example, a resin roller is applied. As the second roller 64, for example, a roller made of rubber having elasticity is applied. Note that the materials of the first roller 63 and the second roller 64 are not limited to those described above. For example, the first roller 63 may be formed of a metal or rubber roller, and the second roller 64 may be formed of a metal or resin roller.

Furthermore, the example in which the rollers that are rotating bodies are applied as the first and second nip portions has been described, but the present invention is not limited thereto, and a flat plate or substantially semicircular guide plate or the like may be applied.

1-4. Example of Configuration of Sheet Size Detector

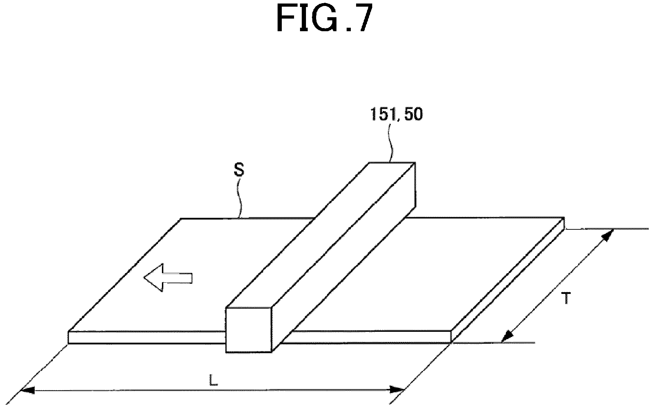

Next, a configuration of the sheet size detector 50 will be described with reference to FIG. 7.

FIG. 7 is a schematic configuration diagram illustrating the sheet size detector 50.

As illustrated in FIG. 7, the sheet size detector 50 includes the CIS 151 longer than a length T of the conveyed sheet S in the width direction. The CIS 151 is a sensor in which a plurality of light receiving sections, a plurality of LEDs indicating light sources, a lens for forming an image of light, and the like are integrated.

The plurality of LEDs irradiate the sheet S with light. Then, the plurality of light receiving sections receive light reflected by the sheet S. The light receiving section of the CIS 151 detects a border line between the leading end and a trailing end of the sheet S and a border line between both end portions of the sheet S in the width direction while conveying the sheet S. Next, the sheet size calculator 112 calculates, based on the output signal from the CIS, the length T of the sheet S in the width direction and the length L of the sheet S in the direction parallel to the conveyance direction.

2. Difference In Displacement Amount of a Driven Roller Shaft due to Difference in Sheet Size

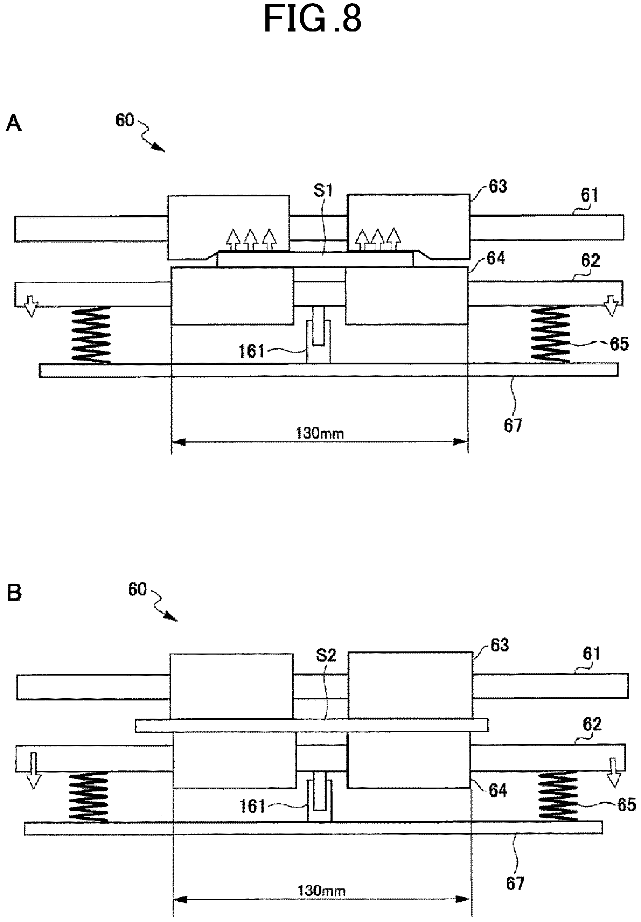

Next, differences in displacement amounts of the driven roller shaft 62 of the sheet physical property detector 60 due to differences in the lengths of the sheet in the width direction (hereinafter referred to as sheet widths) will be described with reference to FIG. 8A to FIG. 9B.

FIGS. 8A and 8B are explanatory diagrams illustrating differences in the displacement amount of the driven roller shaft 62 of the sheet physical property detector 60 due to differences in sheet size (width direction lengths). Examples in which the lengths (hereinafter, referred to as roller widths) of the two first rollers 63 and the two second rollers 64 from one end portions to the other end portions in the axis direction are 130 mm will be described in FIG. 8A and FIG. 8B.

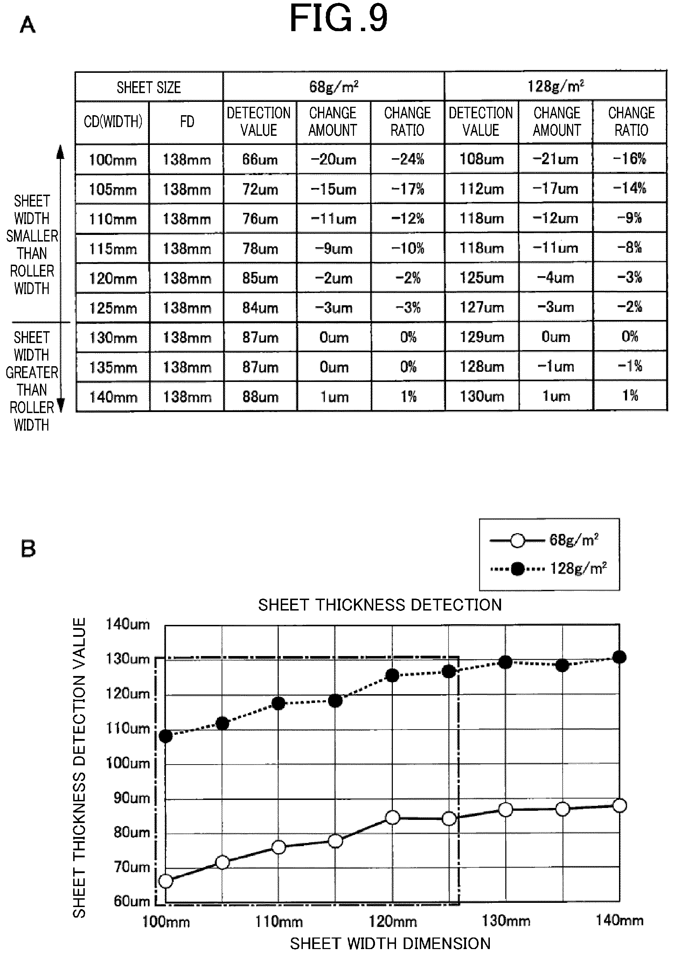

FIG. 9A is a table illustrating a change amount and a change ratio between the detection value by the sheet thickness detection sensor 161 and the actual sheet thickness due to differences in the sheet widths (CD lengths) of the sheets. FIG. 9B is a graph illustrating the detection values of the sheet thickness detection sensor 161 according to differences in the sheet widths of the sheets. A horizontal axis of FIG. 9B indicates the sheet width, and a vertical axis of FIG. 9A indicates the detection value. FIG. 9A and FIG. 9B illustrate sheets having basis weights of 68 $g/m^2$ and 128 $g/m^2$, respectively.

As illustrated in FIG. 8B, when the sheet width of the sheet S2 to be detected is sufficiently longer than the roller widths, that is, when the sheet width is equal to or longer than 130 mm, the sheet S2 comes into contact with entire surfaces of the first roller 63 and the second roller 64. Therefore, the second roller 64 is not crushed. As a result, as illustrated in FIGS. 9A and 9B, the detection value of the sheet thickness detection sensor 161 has no difference from the actual sheet thickness, and the change amount and the change ratio are substantially zero. That is, the sheet thickness of the sheet S2 can be detected with high accuracy in a case where the sheet width of the sheet S2 is sufficiently longer than the roller width.

On the other hand, when the sheet width of the sheet S1 to be detected is shorter than the roller width, the sheet S1 contacts only part of the first roller 63 and the second roller 64. Then, the portion of the second roller 64 that contacts the sheet S1 is locally pressed, and the second roller 64 is partially crushed. Therefore, the displacement amount of the driven roller shaft 62 supporting the second roller 64 becomes small.

Therefore, as illustrated in FIG. 9A and FIG. 9B, it is found that the difference between the detection value of the sheet thickness detection sensor 161 and the actual sheet thickness becomes large and the detection accuracy of the sheet thickness of the sheet S1 decreases. The same result is seen in sheets having different basis weights.

Furthermore, as the sheet width becomes shorter, a collapse amount of the second roller 64 becomes larger. Therefore, as illustrated in FIGS. 9A and 9B, it is found that as the sheet width becomes shorter, the detection accuracy also decreases proportionally.

In the controller 101 of the image forming system 1 according to the present embodiment, correction control is performed on the detection value of the sheet physical property detector 60 according to the sheet width, and the detection accuracy of the sheet thickness is increased.

3. Operation

3-1. Correction Coefficient Acquisition Operation

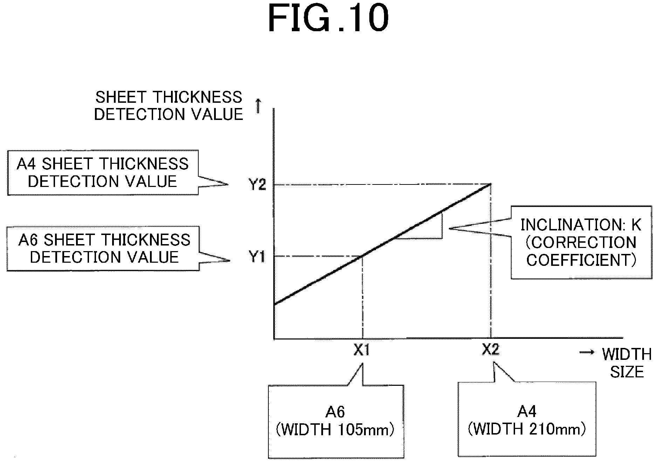

First, an operation of acquiring the correction coefficient K for performing the correction control will be described with reference to FIGS. 10 to 13.

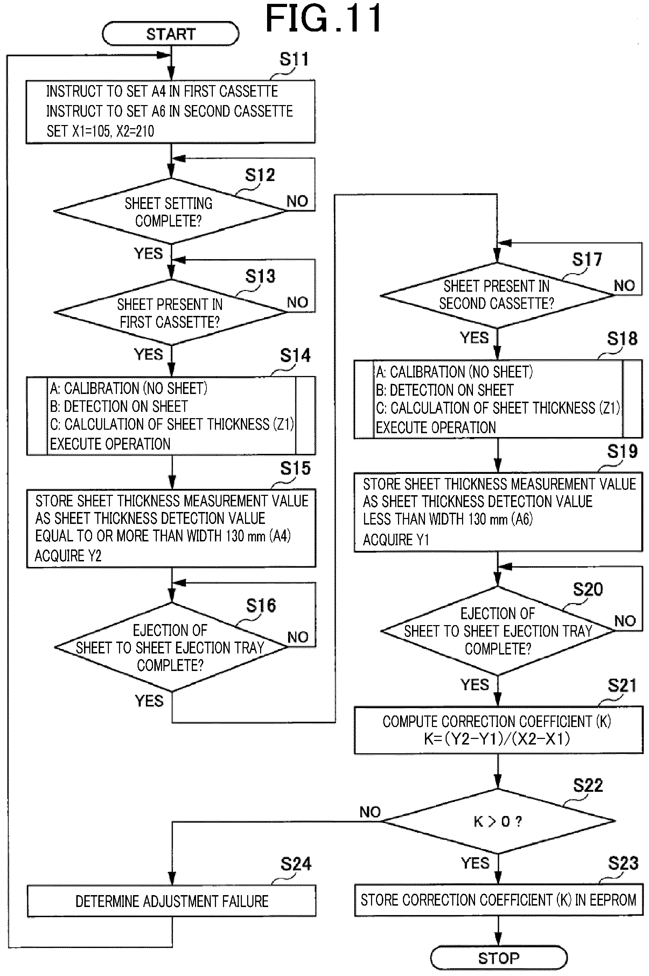

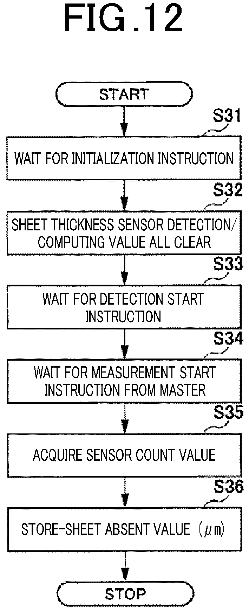

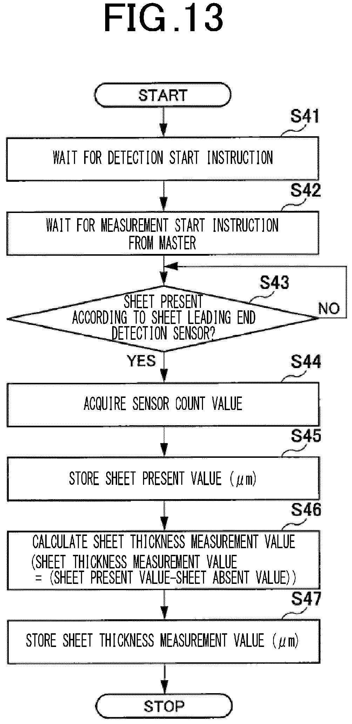

FIG. 10 is a graph illustrating an outline for acquiring the correction coefficient. The horizontal axis of FIG. 10 indicates a general size of the sheet, and the vertical axis of FIG. 10 indicates a sheet thickness detection value. FIG. 11 is a flowchart illustrating an operation of acquiring the correction coefficient K, FIG. 12 is a flowchart illustrating a calibration operation, and FIG. 13 is a flowchart illustrating a sheet thickness calculation operation.

In the examples illustrated in FIGS. 10 to 13, a description will be provided on an example in which, as the general sheet size, the sheet having an A6 size (width 105 mm) shorter than the roller width and the sheet having an A4 size (width 210 mm) longer than the roller width are passed through the sheet characteristic detection device 30 to acquire the correction coefficient K. The following operation is performed in adjustments in a production process of the image forming system 1.

First, as shown in FIG. 11, the controller 101 issues the following instructions to an operator via the operation/display panel 240. An instruction is given to set the sheet of the A4 size in a first sheet feed cassette of the sheet feed unit 10, and an instruction is given to set the sheet of the A6 size in the second sheet feed cassette of the sheet feed unit 10. Furthermore, the controller 101 sets the sheet width X1 of the A6 size (105 mm) in the EEPROM 103, and sets the sheet width X2 of the A4 size (210 mm) in the EEPROM 103 (step S11).

Then, the operator sets one sheet of the A4 size sheet in the first sheet feed cassette, and one sheet of the A6 size sheet in the second sheet feed cassette. Next, the controller 101 determines whether sheet setting is completed (step S12). In the processing of step S12, when the controller 101 determines that the sheet setting has been completed (YES determination in step S12), the controller 101 determines whether there is the sheet in the first sheet feed cassette (step S13).

When the controller 101 determines in step S13 that there is the sheet in the first sheet feed cassette (YES determination in step S13), the controller 101 executes the calculation operation of the sheet thickness of the sheet having the A4 size (step S14).

In the processing of step S14, first, the calibration is executed, then the sheet is passed through the sheet characteristic detection device 30, and the detection operation of the sheet by the sheet physical property detector 60 is performed. Then, a sheet thickness calculation operation is performed by the sheet thickness calculator 111.

Referring now to FIG. 12, the calibration operation will be described.

As illustrated in FIG. 12, the sheet thickness calculator 111 waits for an initialization instruction from the physical property detection controller 113 (step S31). When the initialization instruction is performed, the sheet thickness calculator 111 clears all the detection values and computing values from the sheet thickness detection sensor 161 (step S32).

Next, the sheet thickness calculator 111 waits for a detection start instruction from the physical property detection controller 113 (step S33). Then, the sheet thickness calculator 111 waits for an instruction to start measurement from the controller 101 (step S34). Next, the sheet thickness calculator 111 acquires a sensor count value (detection value) from the sheet thickness detection sensor 161 (step S35). Then, the sheet thickness calculator 111 records the detection value (sheet absent value) in a state where the sheet does not pass through the sheet physical property detector 60 in the EEPROM 103 indicating an example of the storage section (step S36). Thus, the calibration operation is completed.

Next, referring to FIG. 13, the detection operation of the sheet by the sheet physical property detector 60 and the calculation operation of the sheet thickness by the sheet thickness calculator 111 will be described.

As illustrated in FIG. 13, the sheet thickness calculator 111 waits for a detection start instruction from the physical property detection controller 113 (step S41). Then, the sheet thickness calculator 111 waits for an instruction to start measurement from the controller 101 (step S42).

Next, the sheet thickness calculator 111 determines whether or not the sheet leading end detection sensor 162 has detected the sheet, that is, whether the sheet is present in the sheet physical property detector 60 (step S43). In the process of step S43, when it is determined that there is the sheet in the sheet physical property detector 60 (YES determination in step S43), the sheet thickness calculator 111 acquires a sensor count value (detection value) from the sheet thickness detection sensor 161 (step S44). Then, the sheet thickness calculator 111 records the detection value (sheet present value) in a state where the sheet is passing through the sheet physical property detector 60 in the EEPROM 103 indicating an example of the storage section (step S45).

Next, the sheet thickness calculator 111 calculates a sheet thickness measurement value (step S46). In the processing of step S46, the sheet thickness calculator 111 calculates a sheet thickness measurement value by subtracting the sheet absent value acquired by the calibration operation from the sheet present value acquired by the processing of step S45. Then, the sheet thickness calculator 111 records the calculated sheet thickness measurement value in the EEPROM 103 (step S47). Thus, the detection operation of the sheet by the sheet physical property detector 60 and the calculation operation of the sheet thickness by the sheet thickness calculator 111 are completed.

Returning to FIG. 11, the sheet thickness calculator 111 stores the sheet thickness measurement value calculated in step S14 as the sheet thickness detection value Y2 of the A4 size sheet in the EEPROM 103 (step S15). Next, the controller 101 determines whether the sheet whose sheet thickness has been measured has been discharged to the sheet ejection tray of the image forming apparatus 20 or the sheet characteristic detection device 30 (step S16).

In the processing of step S16, when it is determined that the sheet has been ejected to the sheet ejection tray (YES determination in step S16), it is determined whether there is the sheet in the second sheet feed cassette (step S17). When the controller 101 determines in step S17 that there is the sheet in the second sheet feed cassette (YES determination in step S17), the controller 101 executes the calculation operation of the sheet thickness of the sheet having the A6 size (step S18). The calculation operation in step S18 is similar to the calculation operation in step S14, and therefore, a description thereof is omitted.

The sheet thickness calculator 111 stores the sheet thickness measurement value calculated in step S18 as the sheet thickness detection value Y1 of the A6 size sheet in the EEPROM 103 (step S19). As a result, linear data as illustrated in FIG. 10 can be obtained.

Next, the controller 101 determines whether the sheet whose sheet thickness has been measured has been discharged to the sheet ejection tray of the image forming apparatus 20 or the sheet characteristic detection device 30 (step S20). When it is determined in the processing of step S20 that the sheet has been ejected to the sheet ejection tray (YES determination in step S20), the sheet thickness calculator 111 calculates the correction coefficient K (step S21).

Note that the correction coefficient K can be obtained from the inclination of the linear data illustrated in FIG. 10. That is, when the sheet width of the sheet having the A6 size is X1, the sheet width of the sheet having the A4 size is X2, the detection value of the sheet having the A6 size is Y1, and the detection value of the sheet having the A4 size is Y2, the correction coefficient K can be calculated from the following Equation 1.

[Equation 1] $K = (Y2-Y1)/(X2-X1)$

Next, the controller 101 determines whether the calculated correction coefficient K> 0 holds (step S22). In the process of step S22, when the controller 101 determines that the correction coefficient K> 0 (YES determination in step S22), the controller 101 stores the calculated correction coefficient K in the EEPROM 103 (step S23). Thus, the calculation operation of the correction coefficient K is completed.

In the processing in step S22, if the controller 101 determines that the correction coefficient K is less than or equal to 0 (NO determination in step S22), the controller 101 determines that the adjustment operation has failed (step S24). Then, the controller 101 returns to the process of step S11 and performs the operation of acquiring the correction coefficient K again. This makes it possible to reliably acquire the correction coefficient K in the adjustments in the production process of the image forming system 1.

3-2. Example of Sheet Thickness Detection Operation

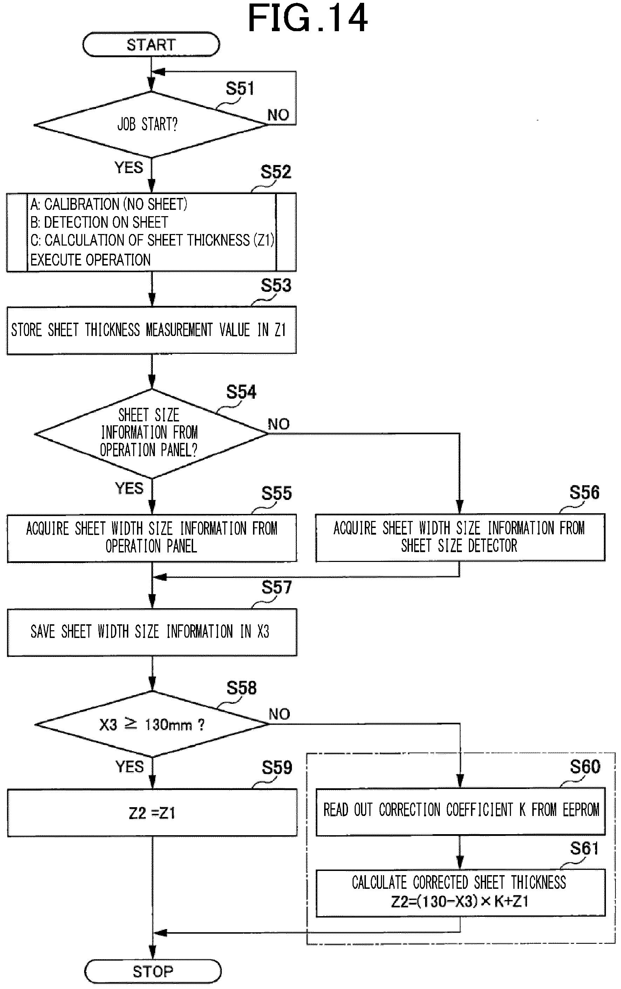

Next, an example of the sheet thickness detection operation using the above-described correction coefficient K will be described with reference to FIG. 14.

FIG. 14 is a flowchart illustrating the sheet thickness detection operation.

As illustrated in FIG. 14, first, the controller 101 determines whether a job by the image forming system 1 is started (step S51). If it is determined in the processing in step S51 that the job is started, the calculation operation of the sheet thickness of the sheet conveyed to the sheet characteristic detection device 30 is performed (step S52). In the processing of step S52, first, the calibration is executed, then the sheet is passed through the sheet characteristic detection device 30, and the detection operation of the sheet by the sheet physical property detector 60 is performed. Then, the sheet thickness calculation operation is performed by the sheet thickness calculator 111. The processing in step S52 is similar to the processing in step S14 and step S18 described above, and therefore, description thereof is omitted.

Next, the controller 101 stores the sheet thickness measurement value calculated in the process of step S52 as Z1 in the EEPROM 103 (step S53). Next, the controller 101 determines whether there is information on the measured sheet width and sheet size of the sheet from the operation/display panel 240 (step S54).

In the processing in step S54, when it is determined that there is the sheet width size information from the operation/display panel 240 (YES determination in step S54), the controller 101 acquires sheet width size information from the operation/display panel 240 (step S55). In addition, in the process of step S54, when it is determined that there is no sheet width size information from the operation/display panel 240 (NO determination in step S54), the controller 101 acquires the sheet width size information from the sheet size detector 50 (step S56).

When the sheet width size information is acquired, the controller stores the sheet width size information in the EEPROM 103 as sheet width X3 (step S57). Next, it is determined whether the stored sheet width X3 is equal to or greater than the roller width (for example, 130 mm) (step S58). In the process of step S58, when the controller 101 determines that the sheet width X3 is equal to or larger than the roller width (for example, 130 mm), the sheet thickness calculator 111 does not perform a computing process for the correction, and sets the measurement detection value Z1 calculated in step S52 as a corrected detection value Z2 (step S59). Then, the controller 101 outputs the corrected detection value Z2 as the sheet thickness.

When the controller 101 determines in step S58 that the sheet width X3 is less than the roller width (for example, 130 mm), the controller 101 reads out the correction coefficient K from the EEPROM 103 (step S60). Next, the sheet thickness calculator 111 corrects the measurement detection value Z1 calculated in step S52 using the correction coefficient K, and calculates the corrected detection value Z2 (step S61). For example, when the roller width is 130 mm, the corrected detection value Z2 is calculated from the following Equation 2.

[Equation 2] $Z2 = (130-X3) \times K + Z1$

Then, the controller 101 outputs the corrected detection value Z2 as the sheet thickness. Thus, the sheet thickness detection operation of the sheet by the image forming system 1 is completed.

As described above, according to the image forming system 1 of the present embodiment, when the sheet width is smaller than the roller width, the correction of the sheet thickness is executed by the processing in step S60 and step S61. Thus, even when the sheet width is smaller than the roller width and the second roller 64 is crushed to lower the detection accuracy, the sheet thickness can be accurately detected. As a result, it is possible to suppress a decrease in the detection accuracy of the detection value of the sheet thickness.

3-3. Modification Example of Sheet Thickness Detection Operation

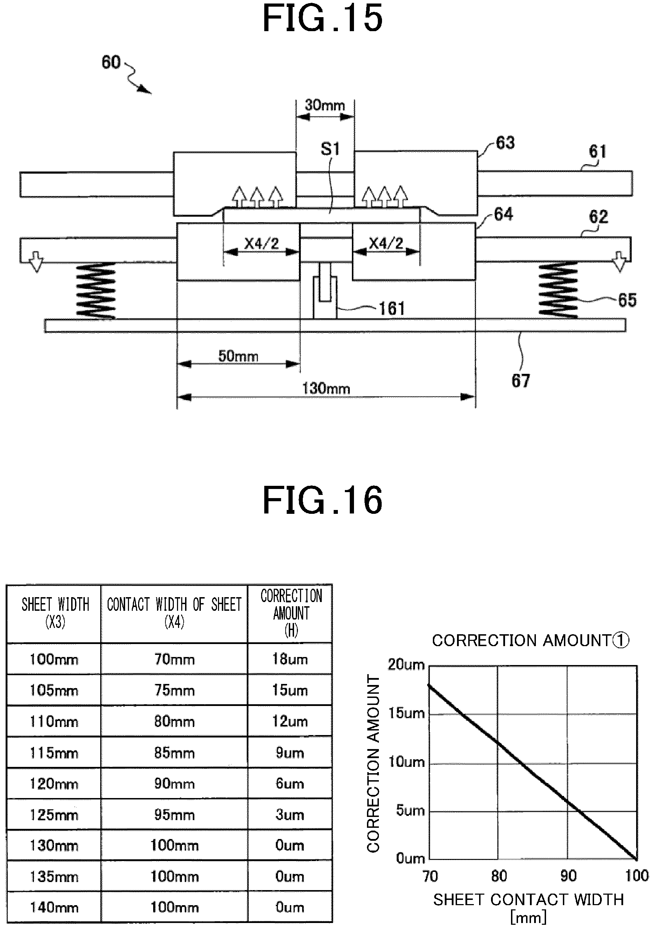

Next, a modification example of the sheet thickness detection operation will be described with reference to FIGS. 15 to 20.

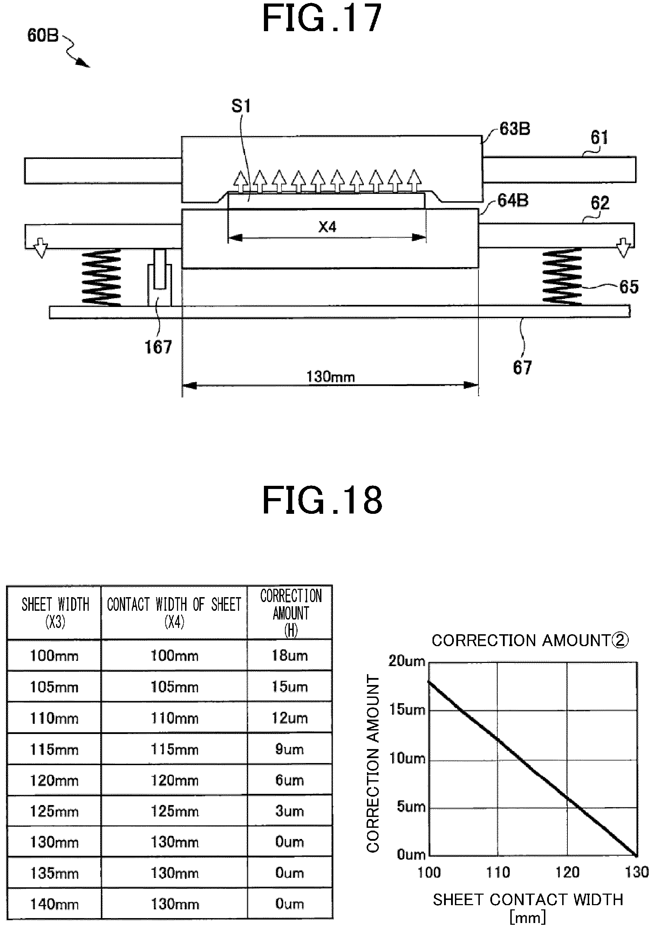

FIG. 15 and FIG. 17 are explanatory diagrams illustrating a modification example of the sheet thickness detection operation, and FIG. 16 and FIG. 18 illustrate correction tables used in the modification example of the sheet thickness detection operation.

As shown in FIG. 15, in the sheet physical property detector 60, the sheet thickness detection sensor 161 is disposed between the two second rollers 64. Here, the distance between the two second rollers 64 is set to 30 mm, for example. Therefore, an actual contact length (hereinafter, referred to as a contact width) X4 between the second roller 64 and the sheet S2 is a value obtained by subtracting an interval between the two second rollers 64 from the sheet width.

Then, in the sheet thickness detection operation according to the modification example, the correction table shown in FIG. 16 is created in advance and stored in the EEPROM 103. When creating the correction table illustrated in FIG. 16, a value obtained by subtracting the interval between the two second rollers 64 from the sheet width X3 is calculated as the contact width X4. Then, the correction values H corresponding to the plurality of sheet widths X3 and contact widths X4 are measured and stored in the EEPROM 103 as the correction table shown in FIG. 16.

FIG. 17 is a view illustrating a modification example of the sheet physical property detector. In the sheet physical property detector 60B shown in FIG. 17, the sheet thickness detection sensor 161 is disposed at one end portion of the driven roller shaft 62 in the axis direction. Therefore, the second roller 64 is not divided into a plurality of parts. In the sheet physical property detector 60B illustrated in FIG. 17, the length (hereinafter, contact width) X4 by which the second roller 64 and the sheet S2 actually contact each other matches the sheet width X3.

Also in the sheet physical property detector 60B shown in FIG. 17, the correction table shown in FIG. 18 can be created by measuring the correction value H corresponding to the plurality of sheet widths X3 and contact widths X4, similarly to the correction table shown in FIG. 16. The correction table illustrated in FIG. 18 is stored in the EEPROM 103.

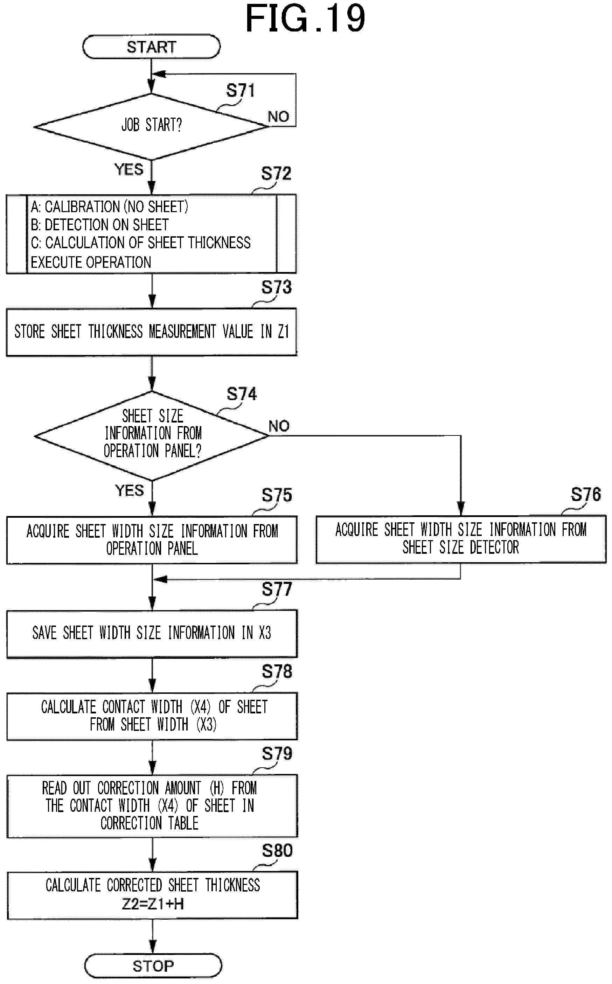

Next, a modification example of the sheet thickness detection operation will be described with reference to FIG. 19.

FIG. 19 is a flowchart illustrating a modification example of the sheet thickness detection operation.

As shown in FIG. 19, since the processing from step S71 to step S77 is the same as the processing from step S51 to step S57 shown in FIG. 14, the description thereof will be omitted. When the storage processing of the sheet width size information in step S77 ends, the controller 101 calculates the sheet contact width X4 from the sheet width X3 (step S78). In the process of step S78, in the case of the sheet physical property detector 60 shown in FIG. 15, a value obtained by subtracting the interval (for example, 30 mm) between the two second rollers 64 from the sheet width X3 is the contact width X4 (X4 = X3-30). In the case of the sheet physical property detector 60B illustrated in FIG. 17, the sheet width X3 is the contact width X4 (X4 = X3). That is, as the contact width, the substantial contact width with the sheet is acquired based on the information on the arrangement of the roller itself (the width of the roller itself, the position of the roller itself in the conveyance path including the above-described interval, and the like).

Next, the controller 101 reads out the correction amount H corresponding to the calculated contact width X4 from the correction table stored in advance in the EEPROM 103 (step S79). Then, the sheet thickness calculator 111 corrects the measurement detection value Z1 calculated in step S72 using the read correction amount H, and calculates the corrected detection value Z2 (step S80). In the processing of step S80, the corrected detection value Z2 is calculated from the following Equation 3.

$$[\text{Equation 3}]\ Z2 = Z1 + H$$

Then, the controller 101 outputs the corrected detection value Z2 as the sheet thickness. Thus, the sheet thickness detection operation of the sheet by the image forming system 1 is completed.

Also in the sheet thickness detection operation using such correction table, even in a case where the contact width of the sheet is smaller than the roller width, a reduction in the detection accuracy of the detection value of the sheet thickness can be suppressed by correcting the detection value based on the correction value.

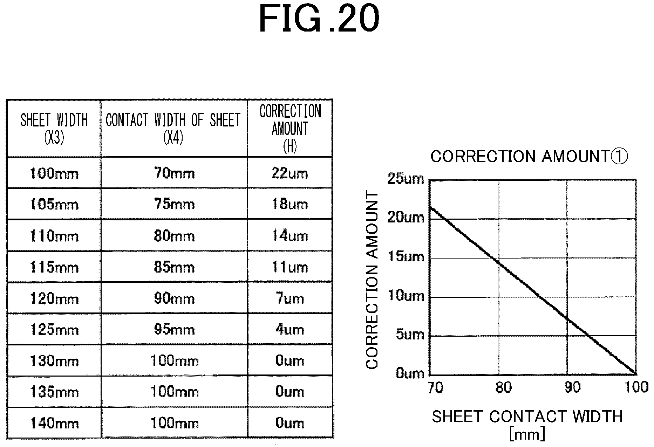

Further, the amount of collapse of the second roller 64 varies depending on the material of the second roller 64. FIG. 20 is the correction table for the second roller 64 made of a material different from that of the correction table illustrated in FIG. 16. When the second roller 64 is changed to the roller made of the different material due to maintenance work or the like, the operator changes the correction table stored in the EEPROM 103 from the correction table shown in FIG. 16 to the correction table shown in FIG. 20. As a result, at the time of the sheet thickness detection operation, the optimum correction value can be obtained by using the correction table suitable for the material of the second roller 64, and the detection accuracy of the detection value of the sheet thickness can be improved.

The correction table stored in the EEPROM 103 is appropriately changed according to the material of the roller and the configuration of the sheet physical property detector. Furthermore, a plurality of correction tables may be stored in the EEPROM 103 in accordance with the material of the roller and the configuration of the sheet physical property detector, and an optimum correction table may be selected from the plurality of correction tables when the sheet thickness detection operation is performed.

The embodiment has been described above, including the operation and effectiveness thereof. However, the present invention is not limited to the above-described embodiment, and various modifications can be implemented without departing from the scope of the invention described in the claims.

In the above-described embodiment, an example in which the above-described operation is performed by the controller 101 of the sheet characteristic detection device 30 is described, but the present invention is not limited thereto. For example, the present invention may be implemented by the controller that controls the image forming apparatus 20 or the controller that controls the entire image forming system 1. Further, the sheet characteristic detection device 30 may be provided in the image forming apparatus 20.

Furthermore, although the example in which the sheet is applied as the recording medium has been described, the recording medium is not limited to this, and other various media such as film and fabric are applicable as the recording medium.

In addition, some or all of the constituent elements, functions, processing sections, and the like described above may be implemented by hardware by, for example, designing an integrated circuit. In addition, each of the above-described constituent elements, functions, and the like may be realized by software by a processor interpreting and executing a program for realizing each function. Information such as programs, tables, and files for implementing the respective functions may be stored in a storage device such as a memory, a hard disk, or a solid state drive (SSD), or a storage medium such as an IC card, an SD card, or a DVD.

Note that although the terms "parallel", "orthogonal", and the like are used in the present specification, these do not mean only "parallel" and "orthogonal" in a strict sense, but include "parallel" and "orthogonal", and furthermore, may be in a state of "substantially parallel" or "substantially orthogonal" within a range in which the function can be exhibited.

Although embodiments of the present invention have been described and shown in detail, the disclosed embodiments are made for purposes of illustration and example only and not limitation. The scope of the present invention should be interpreted by terms of the appended claims.

**Claims**

1. A sheet characteristic detection device comprising:

   a nipper that nips a recording medium;
   a sheet thickness detection sensor that detects displacement of the recording medium in a thickness direction at the nipper; and
   a hardware processor that calculates a thickness of the recording medium based on a detection value detected by the sheet thickness detection sensor,
   wherein the hardware processor corrects the detection value detected by the sheet thickness detection sensor or the thickness according to a length of the recording medium in a width direction orthogonal to a conveyance direction or the length of a portion of the recording medium in contact with the nipper in the width direction, and acquires the thickness of the recording medium.

2. The sheet characteristic detection device according to claim 1, wherein the nipper is a roller.

3. The sheet characteristic detection device according to claim 2, wherein,

   the nipper includes,

      a first roller,
      a second roller disposed opposite to the first roller, and
      a roller shaft rotatably supporting the second roller, and

   the sheet thickness detection sensor detects displacement of the roller shaft in the thickness direction.

4. The sheet characteristic detection device according to claim 1, wherein the nipper is formed of an elastic member.

5. The sheet characteristic detection device according to claim 3, wherein at least one of the first roller and the second roller is formed of an elastic member.

6. The sheet characteristic detection device according to claim 1,

   further comprising an inputter that accepts input of a size of the recording medium,
   wherein the hardware processor acquires the length of the recording medium in the width direction from size information input to the inputter.

7. The sheet characteristic detection device according to claim 1,

   further comprising a size detector that detects the length of the recording medium in the width direction,
   wherein the hardware processor acquires the length of the recording medium in the width direction from information detected by the detector.

8. The sheet characteristic detection device according to claim 7, wherein the size detector is a line-shaped sensor disposed in a sheet conveyance path.

9. The sheet characteristic detection device according to claim 1, wherein the length in the width direction of the portion of the recording medium in contact with the nipper is acquired based on information regarding an arrangement of the nipper and the length of the recording medium in the width direction that is orthogonal to the conveyance direction.

10. The sheet characteristic detection device according to claim 1, wherein the hardware processor does not correct the detection value or the thickness in a case in which the length of the recording medium in the width direction is greater than the length of the nipper in the width direction.

11. The sheet characteristic detection device according to claim 1, wherein the hardware processor changes a correction of the detection value or the thickness in accordance with a material of the nipper.

12. The sheet characteristic detection device according to claim 1,

further comprising a storage that stores a correction coefficient used to correct the detection value in accordance with the length of the recording medium in the width direction or the length of the portion of the recording medium in contact with the nipper in the width direction, wherein the hardware processor acquires the correction coefficient from the storage and corrects the detection value.

13. The sheet characteristic detection device according to claim 1,

further comprising a storage that stores a correction table including a plurality of correction values used to correct the detection value in accordance with the length of the recording medium in the width direction or the length of the portion of the recording medium in contact with the nipper in the width direction, wherein the hardware processor acquires the correction table from the storage, and corrects the detection value based on the corresponding correction value from among the plurality of correction values included in the correction table.

14. An image forming system comprising:

an image forming apparatus that forms an image on a recording medium; and a sheet characteristic detection device that is arranged on an upstream side of the image forming apparatus in a conveyance direction of the recording medium and that detects a characteristic of the recording medium, wherein, the sheet characteristic detection device includes,

a nipper that nips the recording medium, a sheet thickness detection sensor that detects displacement of the recording medium in a thickness direction at the nipper, and a hardware processor that calculates a thickness of the recording medium based on a detection value detected by the sheet thickness detection sensor, and

the hardware processor corrects the detection value detected by the sheet thickness detection sensor or the thickness according to a length of the recording medium in a width direction orthogonal to the conveyance direction or the length of a portion of the recording medium in contact with the nipper in the width direction, and acquires the thickness of the recording medium.

15. A program that causes a sheet characteristic detection device to perform:

detecting displacement of a recording medium in a thickness direction at a nipper that nips the recording medium; acquiring a length of the recording medium in a width direction orthogonal to a conveyance direction or a length of a portion of the recording medium in contact with the nipper in the width direction; and correcting the detected detection value or the thickness according to the length of the recording medium in the width direction or the length of the portion of the recording medium in contact with the nipper in the width direction and acquiring a thickness of the recording medium.

# FIG.1

FIG.2

CONTROLLER 102

CPU

| 113 | 111 |
| PHYSICAL PROPERTY DETECTION CONTROLLER | SHEET THICKNESS CALCULATOR |

| 114 | 112 |
| SHEET SIZE DETECTION CONTROLLER | SHEET SIZE CALCULATOR |

103
EEPROM

LED DRIVE CIRCUIT 104

MOTOR DRIVE CIRCUIT 105

SHEET SIZE INFORMATION

SERIAL COMMUNICATION (UART) CIRCUIT 106

60
SHEET PHYSICAL PROPERTY DETECTOR
(SHEET THICKNESS DETECTION)

PULSE SIGNAL
SHEET THICKNESS DETECTION SENSOR 161

SHEET DETECTION SIGNAL
SHEET LEADING END DETECTION SENSOR 162

50
SHEET SIZE DETECTOR

OUTPUT SIGNAL
CIS 151

SHEET CONVEYANCE ROLLER DRIVE SOURCE (MOTOR) 121

OPERATION/DISPLAY PANEL (IMAGE FORMING APPARATUS) 240

101

14

# FIG .3

# FIG .4

# FIG.5

# FIG.6

# FIG.7

# FIG.8

A

B

# FIG.9

**A**

| SHEET SIZE | | 68g/m² | | | 128g/m² | | |
|---|---|---|---|---|---|---|---|
| CD(WIDTH) | FD | DETECTION VALUE | CHANGE AMOUNT | CHANGE RATIO | DETECTION VALUE | CHANGE AMOUNT | CHANGE RATIO |
| 100mm | 138mm | 66um | −20um | −24% | 108um | −21um | −16% |
| 105mm | 138mm | 72um | −15um | −17% | 112um | −17um | −14% |
| 110mm | 138mm | 76um | −11um | −12% | 118um | −12um | −9% |
| 115mm | 138mm | 78um | −9um | −10% | 118um | −11um | −8% |
| 120mm | 138mm | 85um | −2um | −2% | 125um | −4um | −3% |
| 125mm | 138mm | 84um | −3um | −3% | 127um | −3um | −2% |
| 130mm | 138mm | 87um | 0um | 0% | 129um | 0um | 0% |
| 135mm | 138mm | 87um | 0um | 0% | 128um | −1um | −1% |
| 140mm | 138mm | 88um | 1um | 1% | 130um | 1um | 1% |

SHEET WIDTH SMALLER THAN ROLLER WIDTH

SHEET WIDTH GREATER THAN ROLLER WIDTH

**B**

SHEET THICKNESS DETECTION

Legend: —○— 68g/m²   ····●···· 128g/m²

Y-axis: SHEET THICKNESS DETECTION VALUE (60um, 70um, 80um, 90um, 100um, 110um, 120um, 130um, 140um)

X-axis: SHEET WIDTH DIMENSION (100mm, 110mm, 120mm, 130mm, 140mm)

# FIG.10

SHEET THICKNESS
DETECTION VALUE ↑

A4 SHEET THICKNESS
DETECTION VALUE

A6 SHEET THICKNESS
DETECTION VALUE

Y2

Y1

INCLINATION: K
(CORRECTION
COEFFICIENT)

X1          X2          → WIDTH
                              SIZE

A6
(WIDTH 105mm)

A4
(WIDTH 210mm)

# FIG.11

START

**S11** INSTRUCT TO SET A4 IN FIRST CASSETTE
INSTRUCT TO SET A6 IN SECOND CASSETTE
SET X1=105, X2=210

**S12** SHEET SETTING COMPLETE? —NO
YES

**S13** SHEET PRESENT IN FIRST CASSETTE? —NO
YES

**S14** A: CALIBRATION (NO SHEET)
B: DETECTION ON SHEET
C: CALCULATION OF SHEET THICKNESS (Z1)
EXECUTE OPERATION

**S15** STORE SHEET THICKNESS MEASUREMENT VALUE
AS SHEET THICKNESS DETECTION VALUE
EQUAL TO OR MORE THAN WIDTH 130 mm (A4)
ACQUIRE Y2

**S16** EJECTION OF SHEET TO SHEET EJECTION TRAY COMPLETE? —NO
YES

**S17** SHEET PRESENT IN SECOND CASSETTE? —NO
YES

**S18** A: CALIBRATION (NO SHEET)
B: DETECTION ON SHEET
C: CALCULATION OF SHEET THICKNESS (Z1)
EXECUTE OPERATION

**S19** STORE SHEET THICKNESS MEASUREMENT VALUE
AS SHEET THICKNESS DETECTION VALUE
LESS THAN WIDTH 130 mm (A6)
ACQUIRE Y1

**S20** EJECTION OF SHEET TO SHEET EJECTION TRAY COMPLETE? —NO
YES

**S21** COMPUTE CORRECTION COEFFICIENT (K)
$K=(Y2-Y1)/(X2-X1)$

**S22** $K > 0$ ? —NO
YES

**S23** STORE CORRECTION COEFFICIENT (K) IN EEPROM

**S24** DETERMINE ADJUSTMENT FAILURE

STOP

21

# FIG.12

```
                    ┌─────────────┐
                    │    START    │
                    └──────┬──────┘
                           │            S31
                           ▼
        ┌──────────────────────────────────────┐
        │  WAIT FOR INITIALIZATION INSTRUCTION  │
        └──────────────────┬───────────────────┘
                           │            S32
                           ▼
        ┌──────────────────────────────────────┐
        │  SHEET THICKNESS SENSOR DETECTION/    │
        │     COMPUTING VALUE ALL CLEAR         │
        └──────────────────┬───────────────────┘
                           │            S33
                           ▼
        ┌──────────────────────────────────────┐
        │       WAIT FOR DETECTION START        │
        │             INSTRUCTION               │
        └──────────────────┬───────────────────┘
                           │            S34
                           ▼
        ┌──────────────────────────────────────┐
        │      WAIT FOR MEASUREMENT START       │
        │       INSTRUCTION FROM MASTER         │
        └──────────────────┬───────────────────┘
                           │            S35
                           ▼
        ┌──────────────────────────────────────┐
        │       ACQUIRE SENSOR COUNT VALUE      │
        └──────────────────┬───────────────────┘
                           │            S36
                           ▼
        ┌──────────────────────────────────────┐
        │   STORE-SHEET ABSENT VALUE (μm)       │
        └──────────────────┬───────────────────┘
                           │
                           ▼
                    ┌─────────────┐
                    │    STOP     │
                    └─────────────┘
```

# FIG.13

```
                    ┌──────────────┐
                    │    START     │
                    └──────┬───────┘
                           │                          S41
          ┌────────────────▼──────────────────────┐
          │  WAIT FOR DETECTION START INSTRUCTION  │
          └────────────────┬──────────────────────┘
                           │                          S42
          ┌────────────────▼──────────────────────┐
          │ WAIT FOR MEASUREMENT START INSTRUCTION │
          │             FROM MASTER                │
          └────────────────┬──────────────────────┘
                           │                          S43
                  ╱────────▼────────╲
                 ╱   SHEET PRESENT    ╲          NO
          ◄─────◄ ACCORDING TO SHEET   ►──────────
                 ╲ LEADING END          ╱
                  ╲ DETECTION SENSOR?  ╱
                   ╲────────┬────────╱
                       YES  │                          S44
          ┌────────────────▼──────────────────────┐
          │       ACQUIRE SENSOR COUNT VALUE       │
          └────────────────┬──────────────────────┘
                           │                          S45
          ┌────────────────▼──────────────────────┐
          │     STORE SHEET PRESENT VALUE (μm)     │
          └────────────────┬──────────────────────┘
                           │                          S46
          ┌────────────────▼──────────────────────┐
          │ CALCULATE SHEET THICKNESS MEASUREMENT  │
          │ VALUE (SHEET THICKNESS MEASUREMENT     │
          │ VALUE = (SHEET PRESENT VALUE-SHEET      │
          │ ABSENT VALUE))                         │
          └────────────────┬──────────────────────┘
                           │                          S47
          ┌────────────────▼──────────────────────┐
          │ STORE SHEET THICKNESS MEASUREMENT      │
          │ VALUE (μm)                             │
          └────────────────┬──────────────────────┘
                           │
                    ┌──────▼───────┐
                    │     STOP     │
                    └──────────────┘
```

# FIG.14

START

S51
JOB START? — NO

YES

S52
A: CALIBRATION (NO SHEET)
B: DETECTION ON SHEET
C: CALCULATION OF SHEET THICKNESS (Z1)
EXECUTE OPERATION

S53
STORE SHEET THICKNESS MEASUREMENT VALUE IN Z1

S54
SHEET SIZE INFORMATION FROM OPERATION PANEL? — NO

YES

S55
ACQUIRE SHEET WIDTH SIZE INFORMATION FROM OPERATION PANEL

S56
ACQUIRE SHEET WIDTH SIZE INFORMATION FROM SHEET SIZE DETECTOR

S57
SAVE SHEET WIDTH SIZE INFORMATION IN X3

S58
$X3 \geq 130mm$ ? — NO

YES

S59
$Z2 = Z1$

S60
READ OUT CORRECTION COEFFICIENT K FROM EEPROM

S61
CALCULATE CORRECTED SHEET THICKNESS
$Z2 = (130 - X3) \times K + Z1$

STOP

# FIG.15

60

30mm

S1

63

61

X4/2    X4/2

64

62

161

65

50mm

130mm

67

# FIG.16

| SHEET WIDTH (X3) | CONTACT WIDTH OF SHEET (X4) | CORRECTION AMOUNT (H) |
|---|---|---|
| 100mm | 70mm | 18um |
| 105mm | 75mm | 15um |
| 110mm | 80mm | 12um |
| 115mm | 85mm | 9um |
| 120mm | 90mm | 6um |
| 125mm | 95mm | 3um |
| 130mm | 100mm | 0um |
| 135mm | 100mm | 0um |
| 140mm | 100mm | 0um |

CORRECTION AMOUNT①

CORRECTION AMOUNT

20um

15um

10um

5um

0um

70    80    90    100

SHEET CONTACT WIDTH [mm]

# FIG.17

60B

S1

63B

61

X4

64B

62

65

167

67

130mm

# FIG.18

| SHEET WIDTH (X3) | CONTACT WIDTH OF SHEET (X4) | CORRECTION AMOUNT (H) |
|---|---|---|
| 100mm | 100mm | 18um |
| 105mm | 105mm | 15um |
| 110mm | 110mm | 12um |
| 115mm | 115mm | 9um |
| 120mm | 120mm | 6um |
| 125mm | 125mm | 3um |
| 130mm | 130mm | 0um |
| 135mm | 130mm | 0um |
| 140mm | 130mm | 0um |

CORRECTION AMOUNT②

20um

CORRECTION AMOUNT

15um

10um

5um

0um

100      110      120      130

SHEET CONTACT WIDTH [mm]

# FIG.19

```
                    ( START )
                        │
                        ▼                S71
                ╱───────────────╲
               ╱   JOB START?     ╲──── NO
                ╲───────────────╱
                        │
                       YES              S72
        ┌───────────────────────────────────┐
        │ A: CALIBRATION (NO SHEET)          │
        │ B: DETECTION ON SHEET              │
        │ C: CALCULATION OF SHEET THICKNESS  │
        │ EXECUTE OPERATION                  │
        └───────────────────────────────────┘
                        │                S73
        ┌───────────────────────────────────┐
        │ STORE SHEET THICKNESS MEASUREMENT  │
        │ VALUE IN Z1                        │
        └───────────────────────────────────┘
                        │
                        ▼                S74
                ╱───────────────╲
               ╱   SHEET SIZE     ╲
              ╱  INFORMATION FROM   ╲──── NO
               ╲ OPERATION PANEL?   ╱
                ╲───────────────╱
                        │
                       YES
```

S75 — ACQUIRE SHEET WIDTH SIZE INFORMATION FROM OPERATION PANEL

S76 — ACQUIRE SHEET WIDTH SIZE INFORMATION FROM SHEET SIZE DETECTOR

S77 — SAVE SHEET WIDTH SIZE INFORMATION IN X3

S78 — CALCULATE CONTACT WIDTH (X4) OF SHEET FROM SHEET WIDTH (X3)

S79 — READ OUT CORRECTION AMOUNT (H) FROM THE CONTACT WIDTH (X4) OF SHEET IN CORRECTION TABLE

S80 — CALCULATE CORRECTED SHEET THICKNESS Z2=Z1+H

( STOP )

# FIG.20

| SHEET WIDTH (X3) | CONTACT WIDTH OF SHEET (X4) | CORRECTION AMOUNT (H) |
|---|---|---|
| 100mm | 70mm | 22um |
| 105mm | 75mm | 18um |
| 110mm | 80mm | 14um |
| 115mm | 85mm | 11um |
| 120mm | 90mm | 7um |
| 125mm | 95mm | 4um |
| 130mm | 100mm | 0um |
| 135mm | 100mm | 0um |
| 140mm | 100mm | 0um |

CORRECTION AMOUNT①

CORRECTION AMOUNT

25um
20um
15um
10um
5um
0um

70    80    90    100

SHEET CONTACT WIDTH [mm]

Europäisches
Patentamt

European
Patent Office

Office européen
des brevets

# EUROPEAN SEARCH REPORT

**Application Number**

EP 25 17 7637

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2011 063413 A (KONICA MINOLTA BUSINESS TECH) 31 March 2011 (2011-03-31) | 1-5,7, 9-15 | INV. G03G15/00 |
| Y | * abstract; figures 2-7 * <br> * paragraphs [0003], [0008], [0020], [0027], [0030], [0031] * <br> ----- | 6,8 | |
| Y | US 2022/236674 A1 (KIKUCHI EINOSUKE [JP] ET AL) 28 July 2022 (2022-07-28) <br> * abstract * <br> * paragraphs [0085] - [0089] * <br> ----- | 6 | |
| Y | US 2022/236670 A1 (SHIMOHORA YUYA [JP] ET AL) 28 July 2022 (2022-07-28) <br> * abstract; figure 8 * <br> * paragraphs [0038], [0039] * <br> ----- | 8 | |

**TECHNICAL FIELDS SEARCHED (IPC)**

G03G

The present search report has been drawn up for all claims

| Place of search | Date of completion of the search | Examiner |
|---|---|---|
| The Hague | 13 October 2025 | de Jong, Frank |

EPO FORM 1503 03.82 (P04C01)

## ANNEX TO THE EUROPEAN SEARCH REPORT
## ON EUROPEAN PATENT APPLICATION NO.

EP 25 17 7637

This annex lists the patent family members relating to the patent documents cited in the above-mentioned European search report.
The members are as contained in the European Patent Office EDP file on
The European Patent Office is in no way liable for these particulars which are merely given for the purpose of information.

13-10-2025

| Patent document cited in search report | | Publication date | Patent family member(s) | | Publication date |
|---|---|---|---|---|---|
| JP 2011063413 | A | 31-03-2011 | NONE | | |
| US 2022236674 | A1 | 28-07-2022 | JP | 2022112604 A | 03-08-2022 |
| | | | US | 2022236674 A1 | 28-07-2022 |
| US 2022236670 | A1 | 28-07-2022 | CN | 114815552 A | 29-07-2022 |
| | | | JP | 7567499 B2 | 16-10-2024 |
| | | | JP | 2022112900 A | 03-08-2022 |
| | | | US | 2022236670 A1 | 28-07-2022 |

EPO FORM P0459

For more details about this annex : see Official Journal of the European Patent Office, No. 12/82

**REFERENCES CITED IN THE DESCRIPTION**

**Patent documents cited in the description**

- JP 2021042049 A